**Europäisches Patentamt**

(19) **European Patent Office**

**Office européen des brevets**

(11) Publication number : **0 344 917 B1**

# EUROPEAN PATENT SPECIFICATION

(45) Date of publication of patent specification :
**11.11.92 Bulletin 92/46**

(51) Int. Cl.⁵ : **B01D 53/04, C01B 21/04**

(21) Application number : **89304425.5**

(22) Date of filing : **03.05.89**

(54) **Apparatus for the separation of gas mixtures.**

(30) Priority : **27.05.88 GB 8812643**

(43) Date of publication of application :
**06.12.89 Bulletin 89/49**

(45) Publication of the grant of the patent :
**11.11.92 Bulletin 92/46**

(84) Designated Contracting States :
**DE FR GB IT NL**

(56) References cited :
**DE-A- 2 752 801**
**GB-A- 2 073 043**

(73) Proprietor : **The BOC Group plc**
**Chertsey Road**
**Windlesham Surrey GU20 6HJ (GB)**

(72) Inventor : **Garrett, Michael Ernest**
**92 York Road**
**Woking Surrey (GB)**

(74) Representative : **Wickham, Michael et al**
**c/o Patent and Trademark Department The**
**BOC Group plc Chertsey Road**
**Windlesham Surrey GU20 6HJ (GB)**

## Description

This invention relates to apparatus for the separation of gas mixtures by pressure swing adsorption.

Pressure swing adsorption is a well known process for separating gas mixtures. A bed of molecular sieve adsorbent is employed to separate or extract relatively more of at least one component of a gas mixture admitted to a bed of such adsorbent than of the remaining constituent or constituents of the gas mixture. Accordingly, a product gas enriched in the unadsorbed constituents may be taken from the bed as a product. The bed is then regenerated by being subjected to a lower pressure than the one at which adsorption takes place.

It is known to place a pressure regulator in the product gas outlet pipeline to prevent product gas from passing out of the adsorption bed or beds before the desired adsorption pressure is reached. There is typically a flow restrictor means such as an orifice plate or a flow control valve disposed in the product pipeline downstream of the regulator. For a given restriction, the rate at which product gas is delivered will depend on the pressure drop across the restriction which in turn depends on the rate at which the product gas is demanded. In turn, the purity of the product gas will depend on the flow rate at which it is delivered. The apparatus may be arranged to deliver say 50 standard cubic metres per hour of nitrogen at 99% purity. Should however the demand for product be increased above that specified, the purity will drop. Such a drop in purity can cause a considerable operating problem when it is essential that the purity be above a specific limit. In such a situation, the plant can be arranged to shut-down rather than deliver gas of below the required purity. However, even this expedient may be unsatisfactory if there is not a suitable reserve supply of nitrogen as it involves stopping the supply when it may be needed the most.

The present invention aims at providing apparatus for separating air by pressure swing adsorption which overcomes this problem.

According to the present invention there is provided apparatus for separating air by pressure swing adsorption, comprising at least one vessel able to be charged with adsorbent, having an outlet port communicating with a product gas pipeline having diposed therein a pressure regulator, a first flow restrictor means downstream of the pressure regulator, a buffer volume downstream of the first flow restrictor means, valve means for closing the pipeline in the event that the pressure in the buffer volume falls below a chosen value, the valve means being intermediate the first flow restrictor means and the buffer volume, a by-pass conduit terminating at one end in the pipeline intermediate the pressure regulator and the valve means and at its other end in the buffer volume or in the pipeline intermediate the buffer volume and the said valve means, the by-pass conduit having second flow restriction means disposed therein, said second flow restriction means being sized so as to maintain the purity of the product gas for some period of time after the means closes.

The apparatus according to the present invention will now be described by way of example with reference to the accompanying drawing which is a schematic circuit diagram of apparatus for separating air by pressure swing adsorption.

Referring to the drawing, the illustrated apparatus includes an air feed pipeline 2 leading to a compressor 4. The outlet of the compressor 4 communicates with an air inlet conduit 6. The air inlet conduit 6 is able to be placed in communication with either one of columns 8 and 10 containing beds 12 and 14 respectively comprising carbon molecular sieve adsorbent. Each bed preferably has a lower layer of desiccant (not shown). The columns 8 and 10 are substantially identical to one another, as are the beds 12 and 14. A stop valve 16 (also referred to herein as an on-off valve) is operable to place the bottom of the bed 12 in communication with the inlet conduit 6 or to deny communication therebetween. Analogously, a stop valve 18 is operable to place the bottom of the bed 14 in communication with the inlet conduit 6 or to deny such communication.

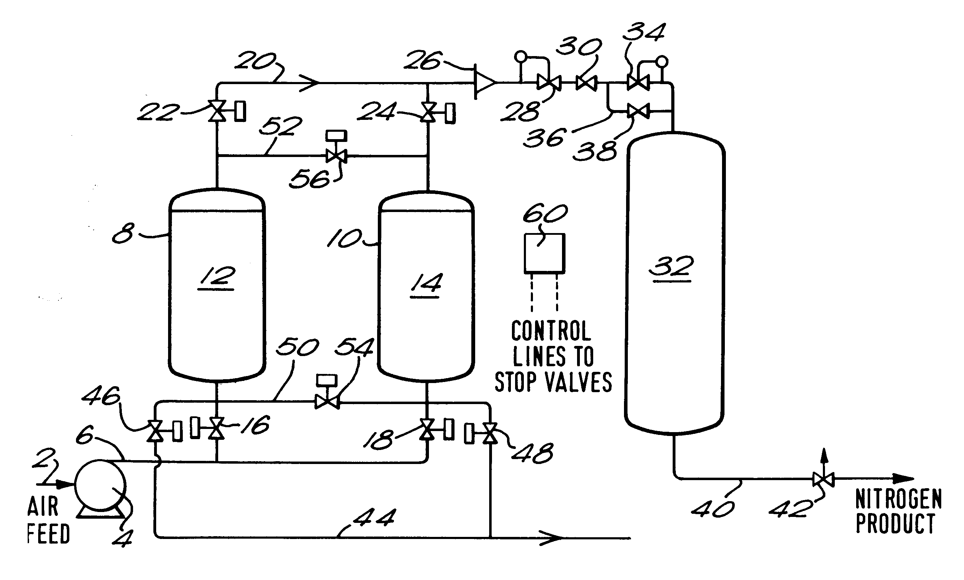

The apparatus shown in Figure 1 has an outlet conduit 20. A stop valve 22 is operable to place the top of the bed 12 in communication with the conduit 20 or to present such communication. Analogously, a stop valve 24 is operable to place the top of the bed 14 in communication with the conduit 20 or to deny such communication. In the conduit 20 there is disposed a non-return valve 26 which is adapted to shut if the pressure downstream of it rises above the upstream pressure. A back pressure regulator 28 is located in the conduit 20 downstream of the non-return valve 26. A first flow restrictor 30 which may take the form of a valve or an orifice plate is located in the conduit 20 downstream of the back pressure regulator 28. The conduit 20 terminates in a reservoir 32. Pressure regulator 34 is located in the conduit 20 between the first flow restrictor 30 and the termination of the conduit 20 and the reservoir 32. A by-pass conduit 36 extends from a relatively upstream part of the conduit 20 intermediate of the first flow restrictor 30 and the foward pressure regulator 34 to a relatively downstream part of the conduit 20 downstream of the forward pressure regulator 34. A second flow restrictor 38 is disposed in the conduit 36 the second flow restrictor may take the form of an orifice plate or a valve.

A reservoir 32 defines a buffer volume that is typically larger than the volume of either the bed 12 or the bed 14. Accordingly, by withdrawing product gas from the reservoir 32 at an appropriate rate a uniform supply can be ensured. The reservoir 32 has an outlet conduit 40 with a flow control valve 42 disposed therein. The position of the flow control valve 42 can be selected to withdraw nitrogen product from the reservoir at a chosen rate.

There is also an outlet conduit 44 for waste or desorbed gas. A stop valve 46 is operable to place the bottom of the bed 12 in communication with the atmosphere via the conduit 44 or to deny such communication. A similar stop valve 48 is operable to place the bottom of the bed 14 in communication with the atmosphere via the conduit 44 or to deny such communication. There is also a conduit 50 which when open places the bottom of the bed 12 in communication with the bottom of the bed 14. A similar conduit 52 places the top of the bed 12 in communication with the top of the bed 14. A stop valve 54 is disposed in the conduit 50 and when closed denies communication between the two beds, a similar stop valve 56 being located in the conduit 52.

The valves 16, 18, 22, 24, 46, 48, 54 and 56 are all typically automatically operated in a manner well known in the art, and the timing of the opening and closing of these valves may be dictated by a programmable valve controller 60, again in a manner well known in the art.

In operation, at the start of a cycle, the bed 12 is at atmospheric pressure and the bed 14 is at its maximum pressure being in communication with the compressor 4. The cycle starts with the beds 12 and 14 being placed in communication with one another through the conduits 50 and 52. In this phase of the cycle, valves 16, 18, 22, 24, 46 and 48 are all in their closed positions and valves 54 and 56 are open. Since the pressure in the bed 14 is greater than that in the bed 12, unadsorbed nitrogen enriched gas in the spaces between the individual particles of adsorbent in the bed 14 flows through conduits 50 and 52 into the bed 12. During this first phase of the cycle and all others, nitrogen product is continuously withdrawn from the reservoir 32 through the outlet pipeline 40. There will typically be fluctuations in the pressure in the reservoir 32 but the reservoir 32 is preferably sized such that such fluctuation is in delivery pressure relatively small and such that average delivery pressure is in the order of or little below the maximum pressure that obtains during the cycle in the vessels 8 and 10. For example, the pressure in the reservoir 28 may be in the order of 506.63 KPa absolute and the back pressure regulator 28 may be set to open when the pressure upstream thereof reaches a value in the range of 607.95 to 810.60 KPa absolute.

After a period of time of a few seconds selected to be sufficient for the pressure in the bed 12 to have equalised or nearly equalised with the pressure in the bed 14, the next phase of the operating cycle starts. The controller 60 generates signals to close valves 54 and 56 and to open valves 16, 22 and 48. Compressed air thus passes into the bed 12 from the compressor 4 and the pressure in the bed 12 gradually increases and reaches the pressure at which the back pressure regulator 28 opens. During this period oxygen is adsorbed by the carbon molecular sieve to leave in the vessel 8 an unadsorbed gas mixture enriched in nitrogen. It will be appreciated that during a previous pressure equalisation step unadsorbed nitrogen-enriched gas has been supplied from the bed 14 to the bed 12. Admission of air into the bed 12 continues for a chosen period of time while the pressure regulator 28 is opened thereby permitting a flow of nitrogen product into the reservoir 32. Typically, the total length of the step of the cycle in which the bed 12 receives air from the compressor 4 is in the order of a minute or so, the adsorption step being allowed to continue for just so long as the purity of the gas delivered to the reservoir 28 remains acceptable when the apparatus is operated normally.

During all the period in which the bed 12 is in communication with the compressor 4 the bottom of the bed 14 communicates with the atmosphere through the valve 48. Accordingly, residual unadsorbed gas in the bed 14 is vented and, as the pressure in the vessel 10 drops, so previously adsorbed oxygen is desorbed and this gas is vented as well. In consequence, the adsorbent in the bed 14 is regenerated ready for the next desorption step that it has to perform.

The next step in the operating cycle is to perform another equalisation of the pressure between the beds 12 and 14. The previous step ends when the pressure equalisation is intiated by the controller 60 generating signals to close the valves 16, 22 and 48 and to open the valves 54 and 56. This pressure equalisation step is analogous to the first pressure equalisation step, except that in this instance the flow of nitrogen-rich gas is from the bed 12 to the bed 14. The duration of this pressure equalisation step is equal to the duration of the first pressure equalisation step and its end is marked by the valves 54 and 56 being closed in response to signals from the controller 60 and the valves 18, 24 and 46 being opened in response to such signals. The final step of the operating cycle then commences. This step is analogous to the second step (in which the bed 12 is adsorbing and the bed 14 is being regenerated) except that in this instance it is the bed 14 that adsorbs oxygen from incoming compressed air while the bed 12 is regenerated by being placed in communication with the atmosphere. At the end of fourth and final step of the operating cycle the valves 18, 24 and 46 are closed by virtue of signals from the controller 60 and the valves 54 and 56 are opened again so that the cycle can be repeated.

In operation, the purity of the nitrogen delivered via the conduit 20 to the reservoir 32 depends on the pressure drop across the first flow restrictor 30. The greater the pressure drop, the greater is the flow rate of gas through the restrictor 30 and the greater the level of impurity in the gas. The flow restrictors 30 and 38 are sized such that when the pressure regulator 28 is opened and the pressure in the reservoir 32 is at a pressure of say 506.63 KPa absolute the nitrogen product delivered to the reservoir 32 is of a specified purity (say no more than 1 per cent by volume of oxygen) and a specified rate (say, 50 standard cubic metres per hour). The restrictor 38 is typically of a size such that when the regulator 34 is open only a small portion of the product nitrogen gas flows through the by-pass conduit 36. In the event that the demand for nitrogen product exceeds that specified, so that the valve 42 needs to be opened wider to enable the reservoir 32 to supply nitrogen product to meet the demand, the pressure in the reservoir 32 will drop. In order to prevent this pressure drop causing a reduction in the purity of the product nitrogen, the forward pressure regulator 34 shuts off when the pressure in the reservoir 32 reaches a chosen value. Typically, the forward pressure regulator 34 may be arranged to close in the event that the pressure in the reservoir 32 falls below 506.63 KPa absolute. With the regulator 34 closed, the by-pass conduit 36 is now the only path available for the nitrogen product gas and thus all the gas will flow through the flow restrictor 38 with the result that there is a reduction in the flow rate to the reservoir 32 thereby enabling purity to be maintained. The flow restrictor 38 is sized such that the purity of the product gas will remain at or above specification until the pressure in the reservoir falls to say 101.32 KPa absolute. Accordingly, the apparatus shown in the drawing is able to continue for at least a short period to supply nitrogen of the desired purity even if product is withdrawn from the reservoir 32 at greater than the specified rate. Moreover, the apparatus will continue to produce its full output even when the buffer has fallen to atmoshperic pressure.

It is not essential that the valve means 34 be a forward pressure regulator. In an alternative embodiment of the invention, the valve 34 may be stop or on/off valve which is closed and opened automatically in response to pressure signals generated by a sensor located downstream of the valve 34, the arrangement being such that when the pressure in the reservoir is at, say, 506.63 KPa absolute or above the valve remains open but in the event of the pressure falling below 506.63 KPa absolute or above the valve remains open but in the event of the pressure falling below 506.63 KPa absolute the valve 34 closes. In addition, instead of employing a vessel as the reservoir or buffer volume 34, a sufficient length of piping may be used for this purpose. Also the conduit 36 may have its upstream end connected upstream of the flow restrictor 30 instead of downstream of this restrictor 30.

## Claims

1. Apparatus for separating air by pressure swing adsorption, comprising at least one vessel (8,10) able to be charged with adsorbent (12,14), having an outlet port communicating with a product gas pipeline (20) having disposed therein a pressure regulator (28), a first flow restrictor means (30) downstream of the pressure regulator (28), a buffer volume (32) downstream of the first flow restrictor means (30), characterized by valve means (34) for closing the pipeline (20) in the event that the pressure in the buffer volume (32) falls below a chosen value, the valve means (34) being intermediate the first flow restrictor means (30) and the buffer volume (32), a by-pass conduit (36) terminating at one end in the pipeline (20) intermediate of the pressure regulator (28) and the valve means (34) and at its other end in the buffer volume (32) or in the pipeline (20) intermediate the buffer volume (32) and the said valve means (34), the by-pass conduit (36) having second flow restriction means (38) disposed therein, said second flow restrictor means (38) being sized so as to maintain the purity of the product gas for some period of time after the valve means (34) closes.

2. Apparatus as claimed in Claim 1, in which the said valve means (34) is a forward pressure regulator.

3. Apparatus as claimed in Claim 1 in which the said valve means (34) is a stop valve which is closed and opened automatically in response to pressure signals generated by a sensor located downstream thereof.

4. Apparatus as claimed in any preceding claim, in which said one end of the by-pass conduit (36) terminates in the pipeline (20) intermediate the first flow restrictor means (30) and the said valve means (34).

5. Apparatus as claimed in any preceding claim, in which the buffer volume (32) comprises a vessel.

6. Apparatus as claimed in any of Claims 1-4, in which there is a sufficient length of piping downstream of the said valve means to act as a buffer volume.

## Patentansprüche

1. Vorrichtung zur Lufttrennung durch Druckwechsel-Adsorption, welche umfaßt mindestens ein Gefäß (8, 10), das zur Beladung mit Adsorbiermittel (12, 14) befähigt ist, mit einem Auslaßanschluß, der mit einer Produktgas-Rohrleitung (20) in Verbindung steht, in die ein Druckregler (28) eingesetzt ist, ein erstes Strömungsbegrenzermittel (30) abstromseitig vom Druckregler (28), ein Puffervolumen (32) abstromseitig von dem ersten Strömungsbegrenzermittel (30), gekennzeichnet durch Ventilmittel (34) zum Schließen der Rohrleitung (20), falls der Druck in dem Puffervolumen (32) unter einen gewählten Wert abfällt, wobei das Ventilmittel (34) zwischen dem ersten Strömungsbegrenzermittel (30) und dem Puffervolumen (32) angeordnet ist, eine an einem Ende in der Rohrleitung (20) zwischen dem Druckregler (28) und dem Ventilmittel (34) endende Bypass-Leitung (36), die an ihrem anderen Ende in dem Puffervolumen (32) oder in der Rohrleitung (20) zwischen dem Puffervolumen (32) und dem Ventilmittel (34) endet, wobei die Bypass-Leitung (36) zweite Strömungsbegrenzermittel (38) in sich eingesetzt enthält, welches zweite Strömungsbegrenzermittel (38) so bemessen ist, daß die Reinheit des Produktgases während einiger Zeit nach dem Schließen des Ventilmittels (34) aufrecht erhalten wird.

2. Vorrichtung nach Anspruch 1, bei der das Ventilmittel (34) ein Vorwärtsdruckregler ist.

3. Vorrichtung nach Anspruch 1, bei der das Ventilmittel (34) ein Absperrventil ist, das automatisch in Abhängigkeit von durch einen abstromseitig davon angeordneten Fühler erzeugten Drucksignalen geschlossen bzw. geöffnet wird.

4. Vorrichtung nach einem der vorangehenden Ansprüche, bei der das eine Ende der Bypass-Leitung (36) in der Rohrleitung (20) zwischen dem ersten Strömungsbegrenzermittel (30) und dem Ventilmittel (34) endet.

5. Vorrichtung nach einem der vorangehenden Ansprüche, bei der das Puffervolumen (32) ein Gefäß umfaßt.

6. Vorrichtung nach einem der Ansprüche 1 bis 4, bei der eine ausreichende Länge von Verrohrung abstromseitig von dem Ventilmittel vorhanden ist, um als Puffervolumen zu wirken.

**Revendications**

1. Dispositif pour séparer l'air par adsorption à pression alternée, comprenant au moins un récipient (8, 10) pouvant être rempli avec de l'adsorbant (12, 14), ayant un orifice de sortie communiquant avec une canalisation (20) de gaz de produit dans laquelle est placé un régulateur de pression (28), des premiers moyens (30) d'étranglement du courant en aval du régulateur de pression (28), un volume tampon (32) en aval des premiers moyens (30) d'étranglement du courant, *caractérisé par* des moyens de vanne (34) pour fermer la canalisation (20) dans le cas où la pression dans le volume tampon (32) tomberait en-dessous d'une valeur donnée, les moyens de vanne (34) étant situés entre les premiers moyens (30) d'étranglement du courant et le volume tampon (32), une conduite de dérivation (36) aboutissant par une extrémité à la canalisation (20) entre le régulateur de pression (28) et les moyens de vanne (34) et par l'autre extrémité au volume tampon (32) ou dans la canalisation (20) entre le volume tampon (32) et lesdits moyens de vanne (34), la conduite de dérivation (36) intégrant des seconds moyens (38) d'étranglement du courant, lesdits seconds moyens (38) d'étranglement du courant étant calibrés pour conserver la pureté du gaz de produit pendant une certaine durée après la fermeture des moyens de vanne (34).

2. Dispositif selon la Revendication 1, dans lequel lesdits moyens de vanne (34) sont un régulateur de pression avant.

3. Dispositif selon la Revendication 1, dans lequel lesdits moyens de vanne (34) sont une vanne d'arrêt qui est automatiquement fermée et ouverte en réponse aux signaux de pression générés par un capteur situé en aval de la vanne.

4. Dispositif selon l'une quelconque des Revendications précédentes, dans lequel ladite une extrémité de la conduite de dérivation (36) aboutit dans la canalisation (20) entre les premiers moyens (30) d'étranglement du courant et lesdits moyens de soupape (34).

5. Dispositif selon l'une quelconque des Revendications précédentes, dans lequel ledit volume tampon (32) comprend un récipient.

6. Dispositif selon l'une quelconque des Revendications 1 à 4, dans lequel est prévue une longueur de canalisation suffisante en aval desdits moyens de vanne pour servir de volume tampon.

CONTROL
LINES TO
STOP VALVES

AIR
FEED

NITROGEN
PRODUCT

EP 0 344 917 B1